# EUROPEAN PATENT APPLICATION

(11) **EP 2 199 740 A2**
(43) Date of publication of application: **23.06.2010**
(21) Application number: 09177080.0
(22) Date of filing: 25.11.2009
(51) Int. Cl.: G01C 19/56

(54) **Angular velocity detecting apparatus**

(30) Priority: 28.11.2008 JP 2008303376
(71) Applicant: Hitachi Automotive Systems Ltd., Hitachinaka-shi Ibaraki 312-8502 (JP)
(72) Inventor: Nakamura, Toshiaki, Tokyo 100-8220 (JP); Matsumoto, Masahiro, 100-8220, Tokyo (JO)
(74) Representative: MERH-IP Matias Erny Reichl Hoffmann

(57) **Abstract**

An angular velocity detecting apparatus including one synchronous detection unit (28) alternately detecting synchronously a displacement signal from a vibrating body (4) with a plurality of synchronous detection signals (Φ1, Φ2); one integral calculation unit (11) alternately carrying out integral calculations of a plurality of outputs of the synchronous detection unit (28); a unit (19, 20) alternately multiplying a plurality of AC signals with two outputs obtained with the synchronous detection unit (28); a unit (21) adding the two multiplied outputs; and a unit (22, 23, 24, 25, 26) feeding back the output of the addition unit (21) to vibrating body (4).

## Description

### BACKGROUND OF THE INVENTION

The present invention is related to a vibration type angular velocity sensor and pertains in particular to an angular velocity sensor that reduces the influence of phase variations in the displacement signal of a vibrating body.

As methods of controlling vibration type angular velocity sensors with high accuracy, apparatuses such as reported in Japanese Patent No. 3,603,501, Japanese Patent No. 3,729,191, and JP-A-5-296771 have been disclosed.

### SUMMARY OF THE INVENTION

The technology reported in Japanese Patent No. 3,603,501 provides a compensating vibration generating means making a vibrating body make compensating vibrations in the direction of the detection axis and suppresses leakage vibrations generated in the direction of the detection axis when no angular velocity is applied to the vibrating body. Consequently, there is a need to provide a compensating vibration generating means inside the angular velocity detection element and a compensation drive circuit in the control part.

The technology reported in Japanese Patent No. 3,729,191 performs suppression of leakage vibrations from the vibration axis direction of the vibrating body and suppression of vibrations due to angular velocity arising in a direction perpendicular to the axis of vibration by simultaneously operating two servo circuits. Consequently, a circuit executing several kinds of control in parallel becomes necessary. Also, if an attempt is made to implement this function in software using a CPU (Central Processing Unit) or a DSP (Digital Signal Processor), two CPUs or DSPs and software become necessary, since two functions are operated simultaneously.

As for the technology reported in JP-A-5-296771, in order to accurately detect the angular velocity even if the temperature changes, the accuracy of detection is increased by obtaining temperature compensation data in the CPU on the basis of detected temperature data and combining the same values with detected angular velocity values. Consequently, the CPU is used for compensation of the angular velocity detection result but it is not used for the control of the angular velocity detection element.

The present invention is made to take circumstances such as these into account, implements a plurality of control functions with time division by means of one circuit, and, in addition, implements the aforementioned functions by means of one CPU or DSP and software.

The angular velocity detecting apparatus (hereinafter called "angular velocity sensor") according to an embodiment of the present invention comprises:
one synchronous detection unit alternately carrying out synchronous detection of the displacement signals from a vibrating body with a plurality of synchronous detection signals;
one integral calculation unit alternately carrying out integral calculations of the plurality of outputs from the synchronous detection unit;
a unit alternately multiplying a plurality of AC signals with the two outputs obtained with the integral calculation unit;
a unit adding the two multiplied outputs; and/or
a unit feeding back the output of the adding unit to the vibrating body.

In order to execute a plurality of identical processes with a time division method by means of one processing circuit, it is possible, in the case of implementing with an analog circuit or a digital circuit, to reduce the circuit scale. Also, since it is possible to consecutively execute a plurality of similar processes by means of one calculation circuit, it is possible to make an implementation with one CPU or DSP and an execution program therefor.

Other objects, features and advantages of the invention will become apparent from the following description of the embodiments of the invention taken in conjunction with the accompanying drawings.

### BRIEF DESCRIPTION OF THE DRAWINGS

Fig. 1 shows the configuration of the signal processing circuit of an angular velocity sensor of the first embodiment according to the present invention.
Fig. 2 is a timing chart of the signal processing circuit of an angular velocity sensor of the first embodiment according to the present invention.
Fig. 3 shows the configuration of the signal processing circuit of an angular velocity sensor of the second embodiment according to the present invention.
Fig. 4 is a flowchart of the signal processing program of an angular velocity sensor of the second embodiment according to the present invention.
Fig. 5 shows the configuration of the signal processing circuit of an angular velocity sensor of the third embodiment according to the present invention.
Fig. 6 is a timing chart of the signal processing circuit of the angular velocity sensor of the third embodiment according to the present invention.
Fig. 7 shows the configuration of the signal processing circuit of an angular velocity sensor of the fourth embodiment according to the present invention.
Fig. 8 is a flowchart of the signal processing program of an angular velocity sensor of the fourth embodiment according to the present invention.

### DESCRIPTION OF THE EMBODIMENTS

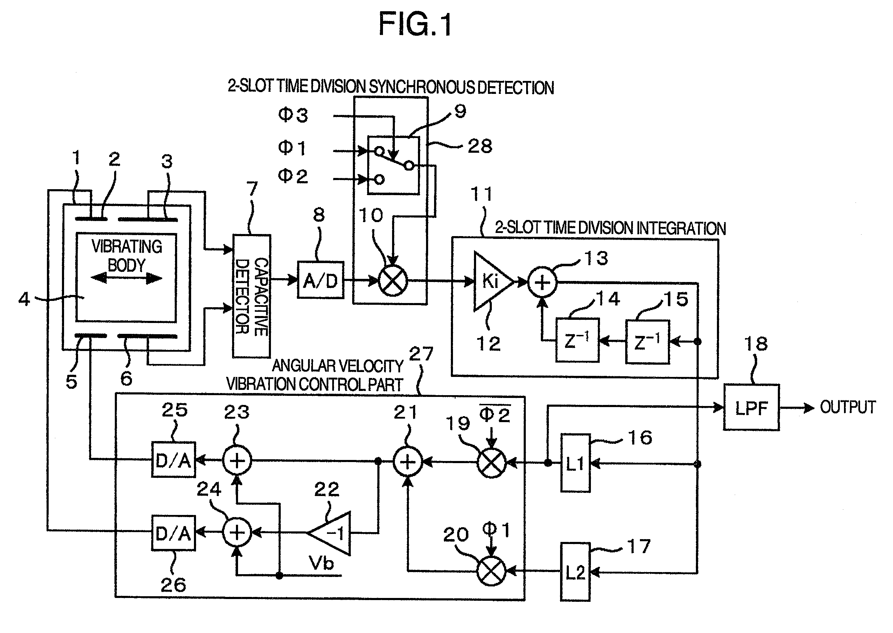

Hereinafter, the embodiments of the present invention will be described using Figs. 1 to 8.

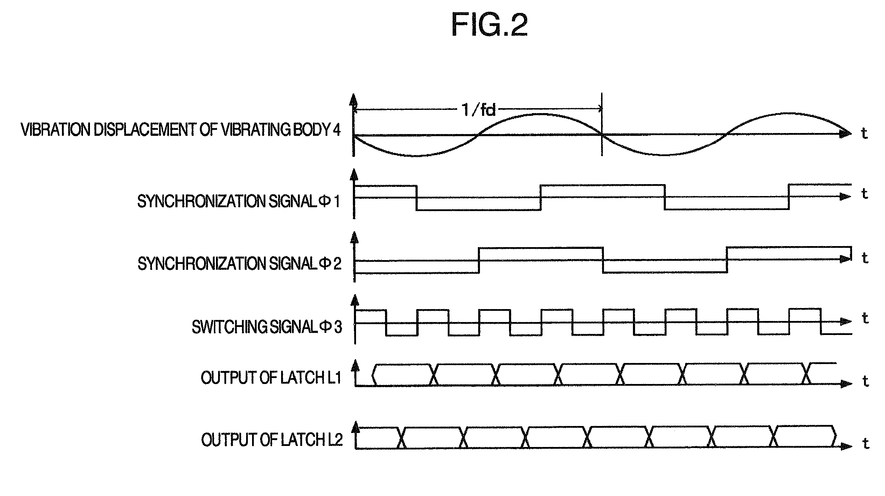

Fig. 1 is a block diagram of the control circuits of an angular velocity sensor of Embodiment 1. Fig. 2 is a timing chart of the control circuit of an angular velocity sensor of Embodiment 1. A detection element 1 of the angular velocity sensor of the present embodiment includes:
a vibrating body 4 having a designated mass and vibrating in the vibration axis direction of the arrow in Fig. 1 at a designated vibration frequency fd;
fixed electrodes 3 and 6 (displacement detection units) arranged facing vibrating body 4 and detecting, with changes in the capacitance, the displacement arising in vibrating body 4 in a direction perpendicular to the axis of vibration by means of the Coriolis force arising from the application of the angular velocity; and
fixed electrodes 2 and 5 making an electrostatic force act on vibrating body 4 so as to negate the Coriolis force acting on vibrating body 4.

Also, the signal processing part includes: a capacitive detector 7 detecting the displacement due to the Coriolis force on vibrating body 4 by detecting the difference between the capacitance between vibrating body 4 and fixed electrode 3 and the capacitance between vibrating body 4 and fixed electrode 6;
an A/D converter 8 converting the output of capacitive detector 7 into a digital signal;
a 2-slot time division synchronous detection part 28 which has: a switch 9 switching, with a signal Φ3 having a frequency which is four times greater than drive frequency fd, between two signals having a frequency of drive frequency fd as shown in Fig. 2, signal Φ1 lagging in phase by 90 degrees with respect to the vibration displacement of vibrating body 4 and a signal Φ2 having the same phase as the vibration displacement of vibrating body 4, and a synchronous detection part 10 multiplying the output thereof;
a 2-slot time division integration part 11 having a coefficient multiplier 12 determining the integration gain, an adder 13 carrying out integral calculations, and a shift register including delay circuits 14 and 15 and having a delay in time that is the inverse number of eight times the frequency of vibration frequency fd;
a latch circuit 16 holding the output of adder 13 at times during which the state of switching signal Φ3 is "1";
a latch circuit 17 holding the output of adder 13 at times during which the state of switching signal Φ3 is "0";
an LPF (Low Pass Filter) 18 extracting the DC component of the output of latch circuit 16; and
an angular velocity vibration control unit 27 which has:
a multiplier 19 generating a signal, with the frequency being drive frequency fd and lagging in phase by 90 degrees with respect to the vibration displacement of vibrating body 4, by multiplying the output of latch circuit 16 with the inverted signal of signal Φ2 and taking the output of latch circuit 16 to be an amplitude value,
a multiplier 20 generating a signal, with the frequency being drive frequency fd and coinciding in phase with the vibration displacement of vibrating body 4, by multiplying the output of latch circuit 17 with signal Φ1 and taking the output of latch circuit 17 to be an amplitude value,
an adder 21 creating the added signal of multiplier 19 and multiplier 20,
an adder 23 adding a fixed bias voltage Vb to the output of adder 21,
a D/A converter 25 converting the output of adder 23 to an analog signal voltage in order to impress it on fixed electrode 5,
an inverter 22 inverting the signal of adder 21,
an adder 24 adding fixed bias voltage Vb to inverter 22, and
a D/A converter 26 converting the output of adder 24 to an analog signal voltage in order to impress it on fixed electrode 2.

Next, an explanation will be given regarding the operation of the control circuit of Fig. 1. In the angular velocity sensor of the present embodiment, the displacement of vibrating body 4 due to the Coriolis force acting on vibrating body 4 is detected by means of fixed electrodes 3 and 6 and capacitive detector 7. And then, there is carried out the action of negating the leakage vibration from the vibration axis direction, resulting from the Coriolis force acting on vibrating body 4 and structural warps and the like of the vibrating body, by impressing a voltage on fixed electrodes 2 and 5 by means of the electrostatic force generated between the fixed electrodes and the vibrating body. As such a means, there is carried out servo control in order to feed back a voltage devised to set to zero the displacement of vibrating body 4 due to the Coriolis force and leakage vibrations arising in a direction perpendicular to the axis of vibration. And then, a part of the feedback voltage during servo control is considered to be an angular velocity detection signal and is output. Initially, synchronous detection, with respect to the displacement signal of the vibrating body obtained via capacitive detector 7 and A/D converter 8, is carried out with 2-slot time division synchronous detection part 28 by means of synchronization signal Φ1 shown in Fig. 2 and the vibration displacement (hereinafter called the Coriolis component) in the direction perpendicular to the axis of vibration. Next, in 2-slot time division integration part 11, the signal obtained with 2-slot time division synchronous detection part 28 is integrated. In the same way, synchronous detection with respect to the displacement signal of the vibrating body is carried out by means of synchronization signal Φ2 shown in Fig. 2 and the vibration displacement (hereinafter called the "error component") leaking in from the direction of the axis of vibration is detected and integrated. And then, in order to feed back the signal obtained in 2-slot time division integration part 11 to vibrating body 4, in angular velocity vibration control part 27, the inverted signal of signal Φ2, shown in Fig. 2 with respect to the Coriolis component, is multiplied in multiplier 19, and a feedback signal is generated with respect to the vibration displacement due to the angular velocity in a direction perpendicular to the axis of vibration of vibrating body 4. Also, with respect to the error component, signal Φ1 shown in Fig. 2 is multiplied in multiplier 20 and there is generated a feedback signal with respect to the leakage vibration displacement from the vibrations in the direction of the axis of vibration of vibrating body 4. In adder 21, the aforementioned two feedback signals are combined and at the very end, DC bias voltage Vb is added thereto in adders 23 and 24 and the vibration displacement in a direction perpendicular to the axis of vibration is negated by impressing the same on fixed electrodes 2 and 5 of vibrating body 4. Also, the output of latch circuit 16 in a state in which this vibration is negated is processed in low pass filter 18 and the output voltage corresponding to the angular velocity is obtained. In the present embodiment, by switching, with switching signal Φ3 having a frequency eight times that of fd, signals Φ1 and Φ2, multiplied with the vibration displacement signal in synchronous detection part 10, by means of switch 9, synchronous detection of the vibration displacement signal is carried out with two phases. Next, by carrying out the data shifting operation of the shift register constituted by delay circuits 14 and 15 in synchronization with the changes in signal Φ3 at a frequency eight times that of fd, the integral calculation of the signal synchronously detected with signal Φ1 and the integral calculation of the signal component synchronously detected with signal Φ2 are alternately repeated at a frequency 8×fd. By means of the aforementioned processing, there are respectively implemented two servo operations with a frequency of 4×fd.

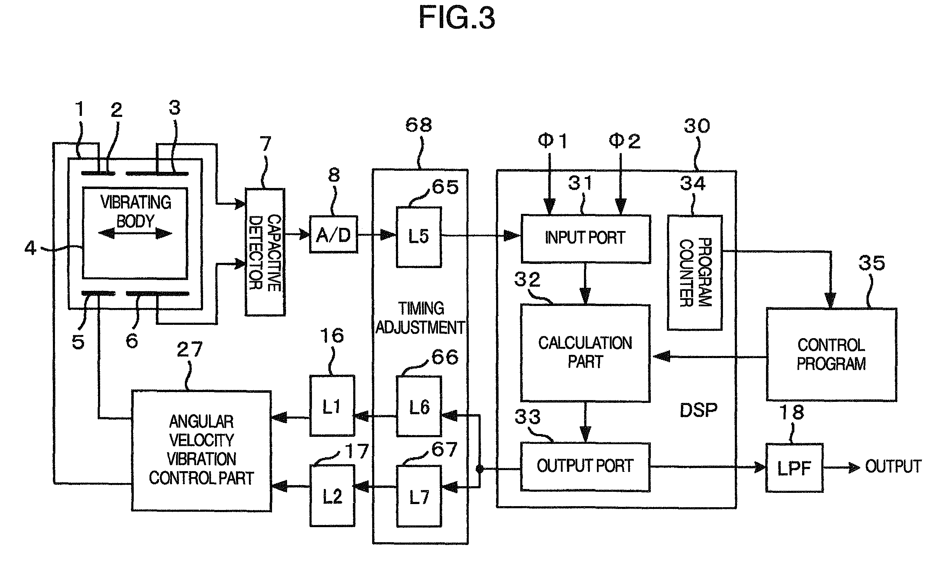

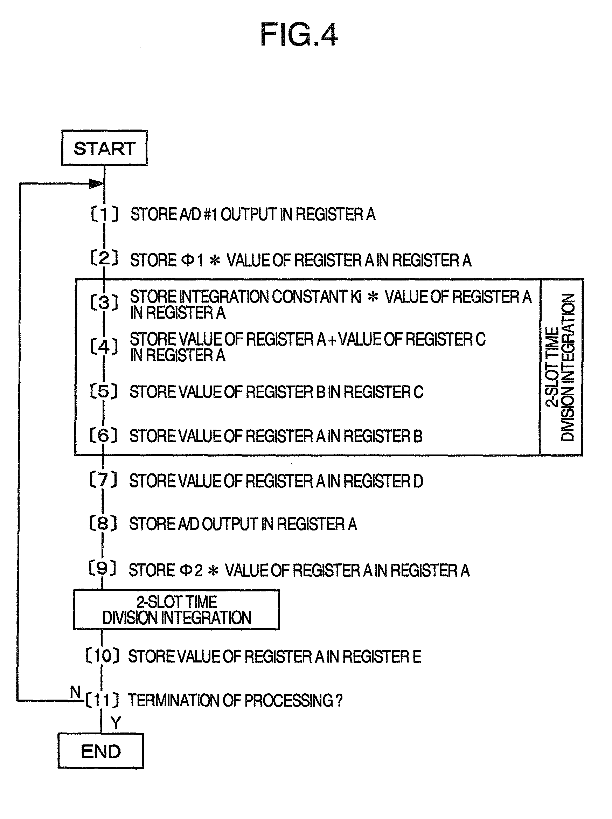

Next, an angular velocity sensor representing Embodiment 2 of the present invention will be explained by means of Fig. 3 and Fig. 4. Fig. 3 is a block diagram of the signal processing circuits of an angular velocity sensor of Embodiment 2. Fig. 4 is a flowchart of the control program of the angular velocity sensor of Embodiment 2. The present embodiment is one indicating a configuration, in Embodiment 1 of Fig. 1, in which 2-slot time division synchronous detection part 28 and 2-slot time division integration part 11 are implemented by means of a Digital Signal Processor (DSP) and a control program therefor. A DSP part 30 includes:
an input port 31 sampling and holding an input signal;
a calculation part 32 using the data held by the input port and, in accordance with sequentially input command codes from a control program part 35, executing calculations such as multiplications, divisions, additions, and subtractions;
an output port 33 temporarily storing the calculation result obtained in calculation part 32 and making outputs to the outside; and
a program counter 34 outputting to control part 35 a stored address signal of a command code to be input. Control program part 35 stores command codes controlling DSP part 30, is a function outputting to DSP part 30 command codes stored in memory addresses corresponding to address signals input from program counter 34, and can be implemented with a general-purpose Read Only Memory (ROM). A timing adjustment part 68 is a function adjusting the timing of the transfer of data between hardware on the input side and output side of DSP part 30 and the control program executed in the interior of DSP part 30. Specifically, the timing adjustment part 68 has a latch circuit 65 latching the output data of A/D converter 8 at the intermediate points in time of the high-level intervals and the intermediate points in time of the low-level intervals, of switching signal Φ3 shown in the timing chart of Fig. 2;
and two latch circuits 66 and 67 temporarily latching, with the timing of the control program side, the 2-slot time division integration processing results output from DSP part 30 by means of control program part 35, in order to satisfy the output timing positions of latches L1 and L2 shown in the timing chart of Fig. 2.

Next, regarding the operation, it will be explained with the flowchart of Fig. 4. The terms "Register A" to "Register E" inside the flowchart indicate registers temporarily storing input data, calculation results, as well as output data in the interior of the DSP. First, the power supply is put in the ON state and if an initial reset is released, program counter 34 starts operating, executes consecutively the command codes of Step 1 to Step 11 stored in control program 35, and, as long as there comes no processing termination instruction, returns to the command code of Step 1 and repeatedly executes a series of processes. The cycle interval from the command code of Step 1 to that of Step 11 is 1/fd and the 2-slot time division integration process executed during a cycle in Steps 3 to 6 is executed twice, for the Coriolis component and the error component. According to the aforementioned processing, processing equivalent to that of Embodiment 1 is implemented.

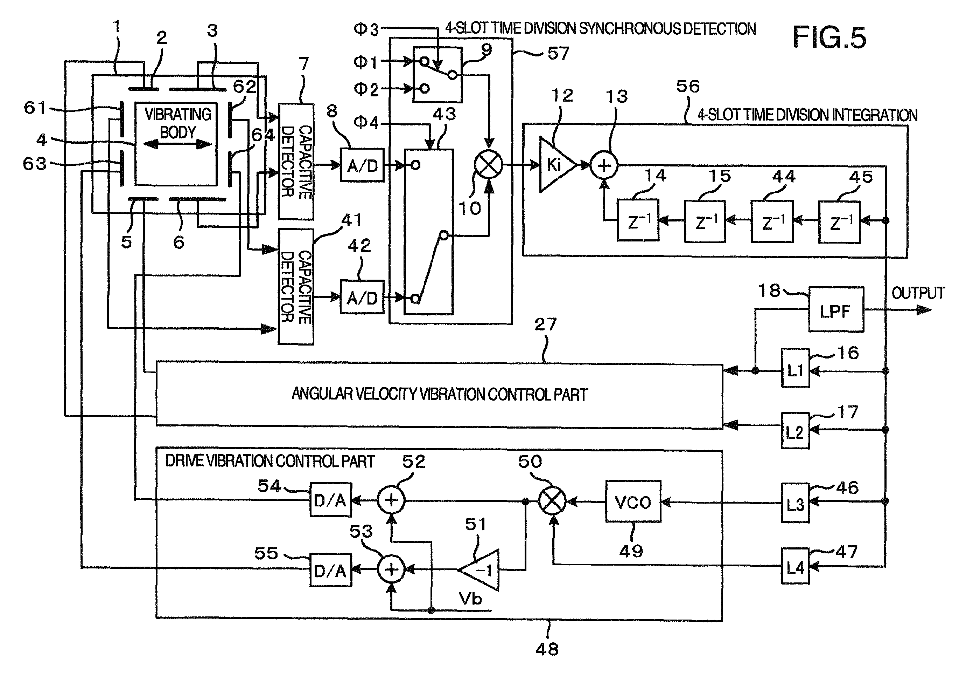

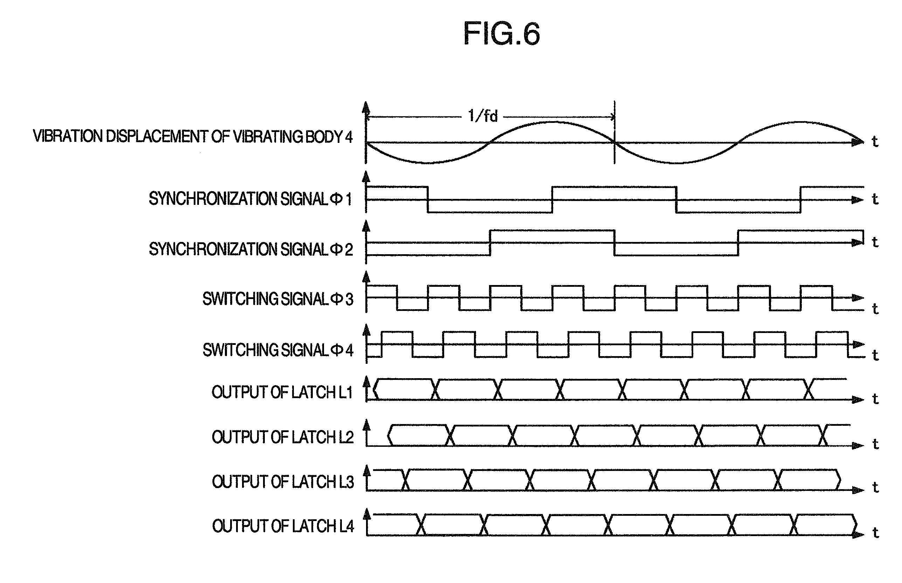

Next, an angular velocity sensor representing Embodiment 3 of the present invention will be explained by means of Fig. 5 and Fig. 6. Fig. 5 is a block diagram of the signal processing circuits of an angular velocity sensor of Embodiment 3. Fig. 6 is a timing chart of the signal processing circuit of the angular velocity sensor of Embodiment 3. The present embodiment is a configuration in which a drive axis direction vibration control function has been added to Embodiment 1 of Fig. 1. With respect to Embodiment 1, an explanation regarding modifications and added functions will be given hereinafter. In detection element 1, fixed electrodes 61 and 62 are electrodes (displacement detection parts) detecting the vibration amplitude and vibration frequency of vibrating body 4 with changes in the capacitance. Also, fixed electrodes 63 and 64 are electrodes (external force application parts) making an electrostatic force operate in order to regulate the vibration amplitude and vibration frequency of vibrating body 4.

The signal processing circuit shown in Fig. 5 includes:
a capacitive detector 41 detecting the vibration direction displacement acting on vibrating body 4 by detecting the difference between the capacitance between vibrating body 4 and fixed electrode 61 and the capacitance between vibrating body 4 and fixed electrode 62;
an A/D converter 42 converting the output of capacitive detector 41 into a digital signal;
a 4-slot time division synchronous detection part 57 having:
   a switch 43 switching the output of A/D converter 8 and the output of A/D converter 42 by means of a signal Φ4 with a frequency equal to that of switching signal Φ3 as shown in the timing chart of Fig. 5 and lagging in phase by 90 degrees with respect to signal Φ3,
   a switch 9 switching signal Φ1 and signal Φ2 with signal Φ3, and
   a synchronous detection part 10 multiplying the output thereof;
   a 4-slot time division integration part 56 composed of:
   a coefficient multiplier 12 determining an integration gain,
   an adder 13 carrying out integration calculations, and
   a shift register composed of delay circuits 14, 15, 44, and 45 for shifting data at a frequency sixteen times that of vibration frequency fd;
   latch circuits 16, 17, 46, and 47 respectively storing the outputs of adder 13 with the four combinations of the states "1" and "0" of switching signal Φ3 and the states "1" and "0" of switching signal Φ4; and
   a drive vibration control part 48 having:
      a VCO (Voltage Controlled Oscillator) 49 being a voltage controlled oscillator and outputting an AC signal of a frequency corresponding to the outputs of latch circuit 46,
      a multiplier 50 multiplying the output of latch circuit 47 and the output of VCO 49,
      an adder 52 adding a fixed bias voltage Vb to the output of multiplier 50,
      a D/A converter 54 converting the output of adder 52 into an analog signal voltage for impressing on fixed electrode 64,
      an inverter 51 inverting the signal of multiplier 50,
      an adder 53 adding a fixed bias voltage Vb to inverter 51, and
      a D/A converter 55 converting the output of adder 53 into an analog signal voltage for impressing on fixed electrode 63.

Next, an explanation will be given regarding the operation. In the angular velocity sensor of the present embodiment, an AC voltage is impressed on fixed electrodes 63 and 64 in order to make vibrating body 4 vibrate in the vibration axis direction and the displacement (amplitude and frequency) in the vibration axis direction of vibrating body 4 due thereto is detected by means of fixed electrodes 61 and 62 and capacitive detector 41. And then, due to the electrostatic force generated by means of the voltage impressed on fixed electrodes 63 and 64, servo control is carried out so as to feed back to the sensor a voltage devised so that the vibration amplitude and vibration frequency, in the direction of the axis of vibration, of vibrating body 4 have designated values. Also, similarly to Embodiment 1, the displacement of vibrating body 4 due to the Coriolis force is detected by means of fixed electrodes 3 and 6 and capacitive detector 7. And then, by means of the electrostatic force generated by the voltage impressed on fixed electrodes 2 and 5, servo control of the impressed voltage is carried out in order to set the displacement of vibrating body 4 due to the Coriolis force and leakage vibration arising in a direction perpendicular to the axis of vibration to zero. And then, a part of the feedback voltage at that time is considered to be the angular velocity detection signal and extracted. Specifically, as for the operation, with respect to the signal of the displacement in the direction of the axis of vibration obtained through capacitive detector 41 and A/D converter 42 and the signal of displacement in a direction perpendicular to the axis of vibration, obtained through capacitive detector 7 and A/D converter 8, four-way synchronous detection based on the combination of the states of signals Φ1 and Φ2 and signals Φ3 and Φ4 is executed with time division, as shown in the timing chart of Fig. 6, with 4-slot time division synchronous detection part 57. This processing is executed four times per interval 1/fd, being the period. Next, in 4-slot time division integration part 56, the signals obtained in 4-slot time division synchronous detection part 57 are integrated consecutively. Simultaneously therewith, each integral calculation result, being the output of adder 13, is stored and shifted in the shift register composed of delay circuits 14, 15, 44, and 45. Next, in order to feed back the signal obtained in 4-slot time division integration part 56 to vibrating body 4, the outputs of 4-slot time division integration part 56 are stored in latch circuits 16 and 17 and the same outputs are processed in angular velocity vibration control part 27 with the contents described in Embodiment 1, and by inputting the same to fixed electrodes 2 and 5 of vibrating body 4, the vibration displacement in the direction perpendicular to the axis of vibration is negated. On the other hand, in order to carry out control in the direction of the vibration axis, the outputs of 4-slot time division integration part 56 are stored in latch circuits 46 and 47, the same outputs are processed in drive vibration control part 48, and, by inputting the same in fixed electrodes 63 and 64 of vibrating body 4, a vibration of vibrating body 4 with designated amplitude and frequency in the direction of the axis of vibration is implemented.

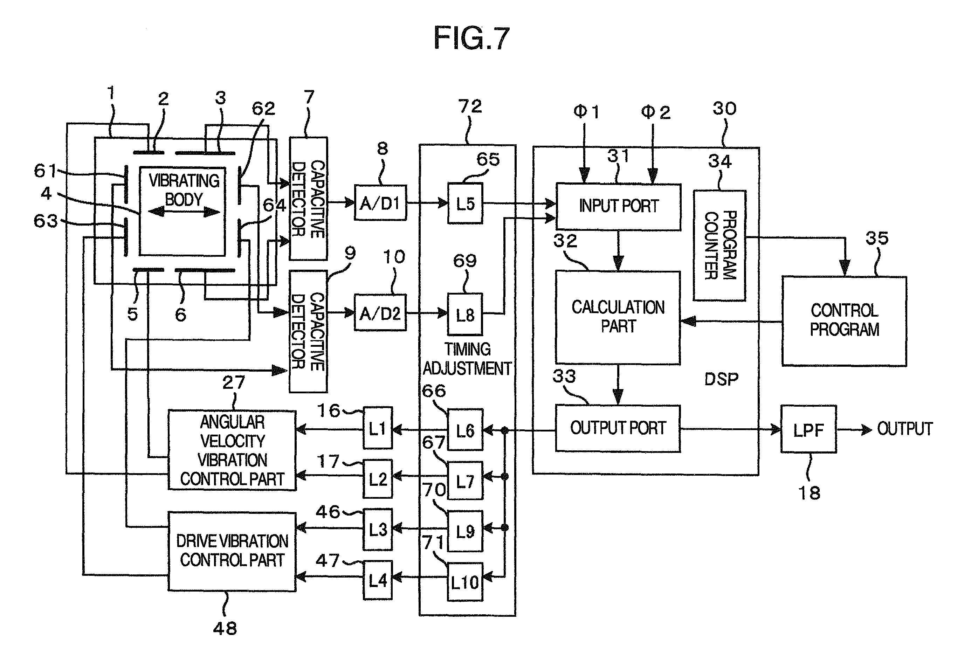

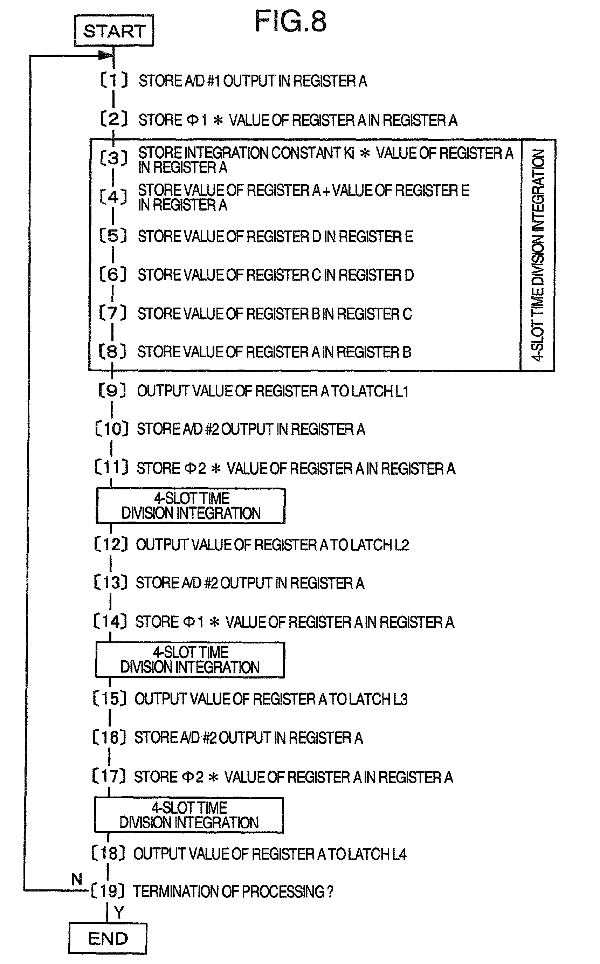

Next, an angular velocity sensor representing Embodiment 4 of the present embodiment will be explained by means of Fig. 7 and Fig. 8. Fig. 7 is a block diagram of the signal processing circuits of the angular velocity sensor of Embodiment 4. Fig. 8 is a flowchart of the signal processing program of an angular velocity sensor of Embodiment 4. In the present embodiment, there is a configuration implementing, by means of a Digital Signal Processor (DSP) described in Embodiment 2 of Fig. 3 and the control program thereof, 4-slot time division synchronous detection part 57 and 4-slot time division integration part 56 found in Embodiment 3 of Fig. 5. Also, a timing adjustment part 72 has the function of regulating the timing of data transfers between the hardware on the input side and output side of DSP part 30 and the control program executing inside DSP part 30. Specifically, the timing adjustment part 72 is composed of:
latching circuit 65 latching the output data of A/D converter 8 at the respective intermediate points in time of the high-level and low-level intervals, of switching signal Φ3 shown in Fig. 6;
a latching circuit 69 latching the A/D conversion output data at the respective intermediate points in time of the high-level and low-level intervals, of switching signal Φ4 shown in Fig. 6; and
four latch circuits 66, 67, 70, and 71 temporarily latching, with the timing of the control program side, the 4-slot time division integration processing results output from DSP part 30 by control program part 35, in order to satisfy the output timing of latch circuits L1 to L4 shown in the timing chart of Fig. 6.

Next, regarding the operation, an explanation will be given with the flowchart of Fig. 8. E.g., when the power supply is put in the ON state, program counter 34 starts operation, executes consecutively the command codes of Steps 1 to 19 stored in control program 35, and, as long as there comes no processing termination instruction, returns to command code of Step 1 and repeatedly executes a series of processes. During one cycle from Step 1 to Step 19, the 4-slot time division integration processing implemented in Steps 3 to 8 is executed four times for the angular velocity vibration control (Coriolis component and error component) and for the drive vibration control (amplitude and frequency).

It should be further understood by those skilled in the art that although the foregoing description has been made on embodiments of the invention, the invention is not limited thereto and various changes and modifications may be made without departing from the spirit of the invention and the scope of the appended claims.

## Claims

1. An angular velocity detecting apparatus, having a vibrating body (4) capable of displacement in a first direction and a second direction being mutually orthogonal with each other, and, in a state where the vibrating body has been made to vibrate in the first direction, detecting the displacement level when the vibrating body has been displaced in the second direction due to the generation of angular velocity, wherein
the angular velocity detecting apparatus comprises means for dividing in time and executing vibration operation in said first direction and displacement level detection operation in said second direction.

2. The angular velocity detecting apparatus according to Claim 1, wherein
operating parameters of the vibration operation in said first direction are vibration amplitude and vibration frequency.

3. The angular velocity detecting apparatus according to Claim 1 or 2, wherein
said operation of detecting displacement level in the second direction includes servo control acting to suppress the displacement level generated by angular velocity and servo control acting to suppress displacement due to leakage vibration from the first direction.

4. An angular velocity detecting apparatus, having a vibrating body (4) capable of displacement in a first direction and a second direction being mutually orthogonal with each other, and having servo control means for operating, in a state where the vibrating body has been made to vibrate in the first direction, to suppress displacement of the vibrating body toward the second direction due to the generation of angular velocity, wherein
the angular velocity detecting apparatus comprises means for dividing in time and executing a plurality of servo control calculations.

5. The angular velocity detecting apparatus according to Claim 4, wherein
operating parameters of the vibration operation in said first direction are vibration amplitude and vibration frequency.

6. The angular velocity detecting apparatus according to Claim 4 or 5, wherein
said servo control means executes a servo control acting to suppress the displacement level generated by angular velocity and a servo control acting to suppress displacement due to leakage vibration from the first direction.

7. An angular velocity detecting apparatus, having a vibrating body (4) capable of displacement in a first direction and a second direction being mutually orthogonal with each other, and, in a state where the vibrating body (4) has been made to vibrate in the first direction, detecting the displacement level when the vibrating body has been displaced in the second direction due to the generation of angular velocity, wherein
the angular velocity detecting apparatus comprises:
a microcomputer or Digital Signal Processor (30) executing control for vibration operation in the first direction or control for displacement level detection in the second direction;
means (27) for storing a control program, for control for said vibration operation or control for said displacement level detection operation; and
means (68) for regulating the data input and output timing of a circuit part connected with said microcomputer or Digital Signal Processor (30).

8. An angular velocity detecting apparatus, comprising:
a vibrating body (4);
force application means (2, 5; 63, 64) for applying a force on said vibrating body;
excitation means (48) for controlling said force application means (63, 64) to make said vibrating body (4) vibrate;
detection means (3, 6, 7; 41, 61, 62) for detecting a level on the basis of the displacement of said vibrating body (4);
control means (27) for controlling said force application means (2, 5) or said excitation means (48) so as to negate said displacement;
time division means (9) for dividing time between a signal (Φ1) from said detection means, taken to be the first signal, and a second signal (Φ2), lagging in phase by nearly 90 degrees with respect to said first signal (Φ1);
processing means (11) for separately processing time-divided first signal (Φ1) and second signal (Φ2);
combination means (21) for combining the processed said first signal (Φ1) and said second signal (Φ2); and
said control means (27) controlling said force application means (2, 5; 63, 64) or said excitation means (48) on the basis of a signal from said combination means (21) to detect an angular velocity on the basis of the controlled level.
